**Europäisches Patentamt**

**European Patent Office**

**Office européen des brevets**

(11) Veröffentlichungsnummer: **0 187 253**
**B1**

(12) # EUROPÄISCHE PATENTSCHRIFT

(45) Veröffentlichungstag der Patentschrift:
04.10.89

(21) Anmeldenummer: **85115166.2**

(22) Anmeldetag: **29.11.85**

(51) Int. Cl.⁴: **B 32 B 27/32**, B 32 B 27/18

(54) Siegelfähige, opake polyolefinische Mehrschichtfolie.

(30) Priorität: **08.12.84 DE 3444866**

(43) Veröffentlichungstag der Anmeldung:
**16.07.86 Patentblatt 86/29**

(45) Bekanntmachung des Hinweises auf die Patenterteilung:
**04.10.89 Patentblatt 89/40**

(84) Benannte Vertragsstaaten:
**BE DE FR GB IT NL**

(56) Entgegenhaltungen:
**EP-A-0 114 311**
**EP-A-0 124 310**

(73) Patentinhaber: **HOECHST AKTIENGESELLSCHAFT,
Postfach 80 03 20, D-6230 Frankfurt am Main 80
(DE)**

(72) Erfinder: **Crass, Günther, Bachstrasse 7, D-6204
Taunusstein 4 (DE)**
Erfinder: **Janocha, Siegfried, Dr., Weinfeldstrasse
28, D-6200 Wiesbaden (DE)**
Erfinder: **Bothe, Lothar, Dr., Am Heiligenhaus 9,
D-6500 Mainz- Gonsenheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine siegelfähige, opake Mehrschichtfolie, bestehend aus einer Basis- oder Trägerschicht aus einem Propylenpolymeren und einer siegelbaren Oberflächenschicht mit niedriger Siegelanspringtemperatur.

Folien dieser Art werden als Verpackungsfolien in schnell-laufenden Verpackungsmaschinen wie z. B. horizontalen Form-Füll-Schließ-Maschinen eingesetzt. Hierzu wird die zunächst als fläche Bahn in die Maschine einlaufende Folie um ihre Längsachse gebogen, wobei das zu verpackende Gut von der Folie umhüllt wird, und zu einer schlauchförmigen Hülle geformt. Die siegelbare Oberflächenschicht bildet die Innenseite des Schlauches. Die Randzonen der Folie werden aufeinander gebracht, so daß Innenseite an Innenseite anliegt. Durch Wärmeeinwirkung entsteht eine von der schlauchförmigen Verpackung abstehende, parallel zur Schlauchlängsachse sich erstreckende streifenförmige Siegelnaht ("fin seal"). Zur Portionierung des eingefüllten Gutes und Herstellung einzelner Packungen werden im Abstand zueinander und quer zur Schlauchlängsachse sich erstreckende Siegelnähte angebracht, und die Schlauchhülle in diesen Quernähten quer zur Hüllenlängsachse durchtrennt.

Für diese Anwendung haben sich übliche Folien auf Basis von Polypropylen als wenig geeignet erwiesen. Insbesondere in modernen, schnell-laufenden Form-Füll-Schließ-Maschinen, in denen die Folie in horizontaler Richtung mit einer Geschwindigkeit von größer als 40 m/min geführt wird, muß die Folie besonders gute Maschinengängigkeit und Gleiteigenschaften aufweisen.

Die siegelfähige, opake polyolefinische Mehrschichtfolie der EP-A-0 114 311, von der die Erfindung ausgeht, besteht aus einer Basisschicht aus einem Propylenpolymeren und mindestens einer siegelfähigen Schicht, welche ein Polyolefinharz, ein niedrigmolekulares, mit dem Polyolefinharz verträgliches Harz, ein Propylenhomopolymer und ein Polydiorganosiloxan enthält. Sie soll ebenfalls als Verpackungsfolie auf horizontalen Form-Füll-Schließ-Maschinen eingesetzt werden und zeigt auch gute Verarbeitungseigenschaften auf schnell-laufenden Verpackungsmaschinen.

Wie sich allerdings herausgestellt hat, zeigt diese Folie nur dann gute Maschinengängigkeit und Gleiteigenschaften, wenn sie unbedruckt verwendet wird. Häufig wird verlangt, daß die Verpackungsfolie mit einem Aufdruck zu versehen ist. In diesen Fällen ist es erforderlich, die Folie einer Coronabehandlung zu unterwerfen, um ihre Bedruckbarkeit zu ermöglichen. Mit diesem Verfahren wird die Oberflächenspannung der Folie erhöht und dadurch die Haftung zwischen Folienoberfläche und Druckfarbe verbessert. Diese Vorbehandlung hat aber den großen Nachteil, daß die guten Laufeigenschaften dieser Folie auf schnell-laufenden Verpackungsmaschinen verloren gehen.

Der vorliegenden Erfindung liegt deshalb die Aufgabe zugrunde, die siegelbare opake polyolefinische Mehrschichtfolie der EP-A-0 114 311 dahingehend zu verbessern, daß sie auch dann gute Verarbeitungseigenschaften auf schnell-laufenden Verpackungsmaschinen, insbesondere horizontalen Form-Füll-Schließ-Maschinen, zeigt, wenn sie zur Verbesserung ihrer Bedruckbarkeit coronabehandelt werden muß.

Diese Aufgabe wird gelöst durch die in Anspruch 1 angegebene Mehrschichtfolie. Die Unteransprüche geben besondere Ausführungsformen der Folie an.

Im Gegensatz zur Mehrschichtfolie der EP-A-0 114 311 besteht die Mehrschichtfolie der Erfindung nur aus einer siegelfähigen Oberflächenschicht, während die andere Oberflächenschicht aus dem Polymeren der Basisschicht aufgebaut ist. Wird diese nichtsiegelfähige Oberflächenschicht coronabehandelt, so treten überraschenderweise nicht die bei der Coronabehandlung von siegelfähigen Oberflächenschichten festgestellten negativen Veränderungen der Folie ein.

Wie weiterhin überraschenderweise festgestellt wurde, zeigt eine nur zweischichtige Folie aus Basisschicht und einer einzigen, siegelfähigen Oberflächenschicht nicht den mit der Erfindung angestrebten Erfolg, wenn analog zur Erfindung die nichtsiegelfähige Folienoberfläche, in diesem Fall die Basisschicht, coronabehandelt wird und die Basisschicht die gleichen Additive enthält wie die nichtsiegelfähige Oberflächenschicht nach der Erfindung. Ihre Maschinengängigkeit und Gleiteigenschaften sowie ihr Glanz sind deutlich schlechter als bei der dreischichtigen Folie nach der Erfindung.

Das Propylenpolymere der Basisschicht der Mehrschichtfolie ist ein für diesen Zweck übliches Polymeres z. B. ein Homopolymer, insbesondere isotaktisches Polypropylen mit einem in n-Heptan löslichen Anteil von maximal 15 Gew.-%, oder ein Copolymer des Propylens mit Ethylen oder $C_4$- bis $C_8$-α-Olefinen mit mindestens 90 Gew.-% Propylenanteil. Das Propylenpolymere der Basisschicht hat zweckmäßigerweise einen Schmelzflußindex von 0,5 bis 8, insbesondere 1,5 bis 4 g/10 min bei 230°C und 2,16 kp Belastung (DIN 53 735) und einen Schmelzpunkt von mindestens 140°C, vorzugsweise 150°C oder höher. Außer der Basisschicht ist auch die nichtsiegelfähige Oberflächenschicht aus dem Propylenhomopolymer aufgebaut. Auch kann die siegelbare Oberflächenschicht Propylenhomopolymer als Zusatz enthalten. Die Basisschicht kann außer dem Propylenpolymeren noch ein antistatisches Mittel enthalten, wobei langkettige, aliphatische tertiäre Amine, deren aliphatischer Rest eine C-Kettenlänge von $C_{12}$ bis $C_{18}$ aufweist und die mit zwei Hydroxyalkyl-($C_1$-$C_4$)-Gruppen substituiert sind, besonders geeignet sind. Diese antistatischen Mittel sind beispielsweise in der US-A-4 230 767 beschrieben. Ein Zusatz von 0,1 bis 0,4 Gew.-% ist ausreichend. Besonders bevorzugt sind N,N-Bis-(2-hydroxyethyl)-($C_{12}$-$C_{18}$)-alkylamine. Weitere Zusätze zur Verbesserung der Gleiteigenschaften in der Basisschicht ergeben praktisch keinen zusätzlichen Effekt hinsichtlich der Maschinengängigkeit der Mehrschichtfolie.

Die Basisschicht enthält ein mit dem Polymeren unverträgliches Additiv, insbesondere anorganische Teilchen wie Calciumcarbonat, Siliziumdioxid und/oder ein Na-Al- Silikat. Diese Teilchen haben gewöhnlich einen mittleren Teilchendurchmesser von 2 bis 8 μm. Es kann aber ebenso vorteilhaft ein organisches unverträgliches Additiv in der Basisschicht dispergiert enthalten sein, vorzugsweise Polystyrol, Polymethylmetchacrylat, Polytetrafluorethylen und/oder Copolymere dieser Verbindungen. Das unverträgliche Additiv wird zweckmäßigerweise in einer Konzentration von 5 bis 30 Gew.-%, insbesondere 10 bis 20 Gew.-%, bezogen auf die Basisschicht, verwendet.

Unverträglich bedeutet dabei, daß die polymere organische Komponente einen anderen Schmelzpunkt und/oder ein anderes natürliches Streckverhältnis als das Polypropylen aufweist, und daß es beim Streckprozeß zum Aufreißen der Polymermatrix und damit zur Vakuolenbildung kommt.

Durch eine Längsstreckung bei Temperaturen von etwa 110 bis 125°C, die um 10 bis 20°C unter den üblichen Temperaturen bei der Walzenlängsstreckung von orientierten Polypropylenfolien liegen, wird eine Vakuolenstruktur erzeugt, die zu dem perlmuttartigen Glanz der Folienoberfläche führt. Dabei muß das spezifische Gewicht der Mehrschichtfolie auf unter 90 %, vorzugsweise auf 50 bis 80 %, des specifischen Gewichts der Mehrschichtfolie vor dem Verstrecken absinken und erreicht dann Werte von gleich oder kleiner als 0,85 g/cm³, insbesondere Werte von 0,5 bis 0,8 g/cm³.

Der perlmuttartige werbewirksame Glanz wird durch die Vakuolenerzeugung (Aufreißen der Polymermatrix an den Korngrenzen der unverträglichen organischen bzw. anorganischen Additive in der Basisschicht) beim Längsstrecken und durch das zugesetzte niedermolekulare Harz in der Siegelschicht erreicht.

Die Beschichtung der Basisfolie mit der Siegelschicht erfolgt üblicherweise durch Coextrusion, wobei die optimale Schichtdicke der Siegelschicht (en) zu je etwa 0,8 bis 1,0 μm in der Endfolie ermittelt wurde. Größere Siegelschichtdicken führen zur Verschlechterung des Verarbeitungsverhaltens an schnellaufenden Verpackungsmaschinen.

Extrusion und Querstreckung werden unter den üblichen Verfahrensbedingungen für Polypropylenfolien durchgeführt.

Die Siegelanspringtemperatur soll im Hinblick auf die Verwendung der Mehrschichtfolie in Form-Füll-Schließ-Maschinen relativ niedrig sein und 100°C nicht überschreiten. Die Siegelanspringtemperatur ist die minimale Siegeltemperatur, bei der die Siegelnahtfestigkeit einen Wert von 0,5 N/15 mm Streifenbreite erreicht.

Zur Bestimmung der Siegelnahtfestigkeit werden zwei übereinander liegende Folien mit zwei glatten beheizten Siegelbacken (20 x 10 cm) eines üblichen Heißsiegelgerätes unter einem Druck von 300 kPa über 0,5 s hitzeversiegelt. Aus der entstandenen Siegelnaht werden in Folienlaufrichtung und quer zur Siegelnaht 15 mm breite Probestreifen entnommen und die zur Trennung der Folien erforderliche Kraft, unter Aufnahme des Kraft-Weg-Diagrammes, Abzugsgeschwindigkeit 200 mm/min, ermittelt.

Ein geeignetes Polyolefinharz für eine solche siegelfähige Oberflächenschicht umfaßt ein Copolymeres aus Propylen- und Ethylen- oder Propylen- und Buten-1-Einheiten. Geeignete Copolymere aus Ethylen- und Propylen-Einheiten enthalten 3 bis 10 Gew.-% Ethylen-Einheiten, aus Propylen und Buten-1-Einheiten 5 bis 40 Gew.-% Buten-1-Einheiten. Geeignete Polyolefinharze für die siegelfähige Oberflächenschicht umfassen auch Terpolymere aus Ethylen-, Propylen- und Buten-1-Einheiten mit einem Anteil von mindestens 80 Gew.-% Propylen-Einheiten. Der Schmelzpunkt der siegelfähigen Oberflächenschicht liegt bei 130°C oder höher, der Schmelzflußindex des Polyolefinharzes der siegelfähigen Oberflächenschicht liegt im Bereich von 1 bis 16 g/10 min bei 230°C und 2,16 kp Belastung (DIN 53 735).

Besonders vorteilhaft sind Gemische aus den genannten Copolymeren und Terpolymeren, insbesondere aus einem $C_3/C_4$-Copolymeren und einem $C_2/C_3/C_4$-Terpolymeren (Anspruch 3), wie es auch in der EP-A-0 114 311 beschrieben wird. Besonders bei Verwendung dieses speziellen Polymergemisches für die siegelfähige Oberflächenschicht hat sich überraschenderweise gezeigt, daß übliche Zusätze von Gleitmitteln (Polydiorganosiloxan) und/oder Antiblockmitteln (Silikate) in der siegelfähigen Schicht nicht erforderlich sind.

Zur Verbesserung der optischen Eigenschaften, insbesondere des Glanzes, und Herabsetzung der Kratzempfindlichkeit der Mehrschichtfolie ist es zweckmäßig, in der siegelfähigen Oberflächenschicht in an sich bekannter Weise 5 bis 15 Gew.-%, bezogen auf die siegelfähige Oberflächenschicht, eines niedrigmolekularen, mit dem siegelfähigen Polyolefinharz verträglichen thermoplastischen Harzes zu verwenden, das einen Erweichungspunkt von 60 bis 180°C, insbesondere 80 bis 130°C (DIN 1995 - U4) aufweist. Als Beispiel für diese Harze sind zu nennen Kohlenwasserstoffharze, Ketonharze, Polyamidharze, Kolophonium, Dammarharze sowie chlorierte aliphatische und aromatische Kohlenwasserstoffharze. Der Zusatz dieser Harze zu einer polyolefinischen siegelfähigen Oberflächenschicht wird in der EP-A-0 114 311 beschrieben.

Ein weiterer Zusatz zur Verbesserung der optischen Eigenschaften, insbesondere der Glanzwirkung, und Kratzfestigkeit, aber auch der Maschinengängigkeit besteht in der Zugabe von 5 bis 15 Gew.-% eines Propylenhomopolymeren zu der siegelfähigen Oberflächenschicht. Geeignete Propylenhomopolymere sind die gleichen, wie sie oben auch für die Basisschicht beschrieben sind. Der Schmelzpunkt des Polypropylens liegt oberhalb des Schmelzpunkts des Polyolefinharzes der siegelfähigen Oberflächenschicht.

Es ist erfindungswesentlich, daß eine zweite nichtsiegelfähige Oberflächenschicht vorhanden ist und diese Schicht - im Gegensatz zur siegelfähigen Schicht und zur Basisschicht - ein Gleitmittel enthält. Überraschenderweise hat sich gezeigt, daß die Mehrschichtfolie sowohl in ihrer Maschinengängigkeit als auch in ihrer optischen Wirkung (Glanz) deutlich verbessert wird, wenn das Gleitmittel nicht in der siegelfähigen Schicht, sondern ausschließlich in der nichtsiegelfähigen Schicht vorhanden ist.

Die nichtsiegelfähige Oberflächenschicht besteht zum überwiegenden Teil aus einem Propylenhomopoly-

EP 0 187 253 B1

meren mit geringen Mengen von vorzugsweise Polydiorganosiloxan als Gleitmittel. Fettsäureamide als Gleitmittel haben zwar im Hinblick auf die Maschinengängigkeit eine ähnliche Wirkung, jedoch ist Polydiorganosiloxan vorzuziehen, da es die optischen Eigenschaften der Folie nicht negativ beeinflußt.

Besonders geeignete Propylenhomopolymere wurden oben bei der Beschreibung der Basisschicht erläutert. Es ist jedoch aus Gründen der Coextrusionstechnik zweckmäßig, daß das Polypropylen der nichtsiegelfähigen Oberflächenschicht einen Schmelzflußindex aufweist, der höher ist als der Schmelzflußindex des Polypropylens der Basisschicht.

Das Polydiorganosiloxan wird in einer Menge von 0,3 bis 2,5 Gew.-%, bezogen auf die nichtsiegelfähige Oberflächenschicht, verwendet und ist vorzugsweise ein Polymethylphenylsiloxan oder Polydimethylsiloxan, insbesondere mit einer kinematischen Viskosität von $10^3$ bis $10^6$, insbesondere 20.000 bis 30.000 mm$^2$/s bei 25°C.

Die Dicke der Oberflächenschichten sollte weniger als 3 µm, insbesondere weniger als 1,2 µm betragen, da sich bei größeren Schichtdicken das Verarbeitungsverhalten auf schnell-laufenden Verpackungsmaschinen verschlechtert. Die biaxial gereckte Mehrschichtfolie weist vorzugsweise eine Gesamtdicke von 15 bis 60, insbesondere 20 bis 40 µm auf.

Die Herstellung der Formmassen für die Oberflächenschicht und das Zusammenführen der Formmassen mit der Basisschicht erfolgt nach dem üblichen Verfahren der Schmelzextrusion. Beim Coextrusionsverfahren werden die zur Herstellung von siegelfähigen, opaken polyolefinischen Mehrschichtfolien mit perlmuttartigem Glanz erforderlichen Streckbedingungen eingehalten, wie sie z. B. in der EP-A-0 004 633 oder EP-A-0 114 311 beschrieben sind. Nach dem Strecken in Längs- und Querrichtung wird eine Coronaentladung mit üblicher Intensität auf der nichtsiegelfähigen Oberflächenschicht durchgeführt. Hierbei werden elektrische Spannung und Stromstärke so eingestellt, wie sie erforderlich sind, um bei einer vergleichbaren Folie ohne Gleitmittelzusatz (Polysiloxanzusatz) eine Oberflächenspannung von 36 bis 40 mN/m zu erhalten. Eine direkte Messung der Oberflächenspannung der Folie über ihre Benetzbarkeit mit Prüfflüssigkeiten (DIN 53 364) ist in Gegenwart von Polysiloxan nicht möglich.

Die coronabehandelte nichtsiegelfähige Oberflächenschicht nimmt einwandfrei Druckfarbe an. Die Druckfarbe haftet ausgezeichnet auf dieser Oberfläche, wobei sowohl Einkomponenten- wie Zweikomponenten-Druckfarben geeignet sind.

Die Erfindung wird durch das nachfolgende Beispiel näher erläutert. Die Meßwerte wurden nach folgenden Meßverfahren ermittelt:

Schmelzflußindex   - DIN 53 735 bei 230°C und 2,16 kp Belastung
Erweichungspunkt - DIN 1935-U4 (Vicat - A)
Schmelzpunkt        - DSC-Messung, Maximum der Schmelzkurve, Aufheizgeschwindigkeit 20°C/min

**Beispiel**

Mit Hilfe des Coextrusionsverfahrens wurden aus einer Breitschlitzdüse von 280 mm Breite und 1,8 mm Spalthöhe bei einer Extrusionstemperatur von 260°C und einer Fördermenge von 70 kg/h als Summe eine 1,3 mm dicke Mehrschichtfolie extrudiert, deren Basis aus Propylenhomopolymer mit einem Schmelzflußindex von 2 g/10 min bestand und 15 Gew.-%, bezogen auf die Basisschicht, Calciumcarbonat-Teilchen mit einem mittleren Teilchendurchmesser von etwa 3 µm enthielt. Auf den beiden Oberflächen der Basisschicht befanden sich jeweils eine Oberflächenschicht. Diese Folien wurden nach Durchlaufen einer 20 mm langen Luftstrecke auf einer 30°C warmen Kühlwalze des Durchmessers 600 mm abgeschreckt, die mit einer Umfangsgeschwindigkeit von 4,5 m/min lief. Danach wurden die Folien von der Kühlwalze auf ein Walzentrio von ebenfalls 30°C und einer Umfangsgeschwindigkeit von ebenfalls 4,5 m/min übergeben und dann nach Erwärmung auf 115°C bis 120°C von einem weiteren Walzentrio um den Faktor 6 längsgestreckt. Anschließend wurden sie bei 175°C Lufttemperatur auf das 10fache in Querrichtung verstreckt.

Die so gebildete Mehrschichtfolie hatte eine Dicke von ca. 33 µm und eine Dichte von 0,70 g/cm$^3$. Die nichtsiegelfähige Oberflächenschicht wurde durch Coronabehandlung bedruckbar gemacht.

Die siegelfähige Oberflächenschicht bestand aus a) 80 Gew.-%, bezogen auf die Siegelschicht, einer Olefinharzzusammensetzung, die sich aus

$a_1$) 50 Gew.-% eines Ethylen-Propylen-Butylen-Terpolymeren, bestehend aus 1,4 Gew.-% Ethylen, 2,8 Gew.-% Butylen und 95,8 Gew.-% Propylen (jeweils bezogen auf das Terpolymere), sowie

$a_2$) 50 Gew.-% eines Propylen-Butylen-Copolymeren, bestehend aus 66,8 Gew.-% Propylen und 33,2 Gew.-% Butylen (bezogen jeweils auf das Copolymere), zusammensetzt, was einem Gehalt von 0,7 Gew.-% Ethylen, 81,3 Gew.-% Propylen und 18 Gew.-% Butylen entspricht. Die Olefinzusammensetzung $a_1$ + $a_2$ hatte einen Schmelzflußindex von 8 g/10 min und einen Schmelzpunkt von 150°C;

b) 10 Gew.-%, bezogen auf die Siegelschicht, von ®Arkon P 125, einem hydrierten Kohlenwasserstoffharz mit einem Erweichungspunkt von 125°C als das mit der Olefinharzzusammensetzung verträgliche Harz;

c) 10 Gew.-%, bezogen auf die Siegelschicht, eines Propylen-Homopolymers mit einem Schmelzpunkt von 162°C (®Hostalen PPN 1060 F).

4

Die nichtsiegelfähige Oberflächenschicht bestand aus
a) 99,2 Gew.-% isotaktischem Propylenhomopolymer (i2,16 = 3,5 g/10 min) mit Schmelzpunkt von 162° C,
b) 0,8 Gew.-% Polydimethylsiloxan, kinematische Viskosität 25.000 mm$^2$/s (25°C).
Die nachfolgende Tabelle zeigt eine Bewertung der Mehrschichtfolie bei ihrer bestimmungsgemäßen Verwendung auf einer horizontal arbeitenden Form-Füll-Schließ-Maschine im Vergleich zu der aus der EP-A-0 114 311 bekannten Mehrschichtfolie.

**Verarbeitungstest auf der horizontal arbeitenden Form- Füll-Schließ-Maschine**

| | Abpackgeschwindigkeit | | |
|---|---|---|---|
| | 10 m/min | 20 m/min | 40 m/min |
| Vergleichsbeispiel 1 nach EP-A-0 114 311 (unbedruckbar) | + | + | + |
| Vergleichsbeispiel 2 nach EP-A-0 114 311 (coronabehandelt, bedruckbar) | + | - | - |
| Beispiel nach der Erfindung | + | + | + |

Wertung der Maschinengängigkeit:

+ völlig störungsfreier Maschinenlauf
- mehr als 3 Störungen/10 min
- kein kontinuierlicher Folienlauf möglich

## Patentansprüche

1. Siegelfähige, opake polyolefinische Mehrschichtfolie mit einer Dichte von gleich/kleiner als 0,85 g/cm$^3$, bestehend aus einer Basisschicht aus einem Propylenpolymeren, die ein mit dem Polymeren unverträgliches Additiv enthält, aus einer siegelfähigen Oberflächenschicht mit einer Siegelanspringtemperatur von gleich oder kleiner als 100°C und aus einer zweiten Oberflächenschicht, dadurch gekennzeichnet, daß die zweite Oberflächenschicht nicht siegelfähig ist und in Kombination die folgenden Komponenten enthält:

a) 97,5 bis 99,7 Gew.-% eines Propylenhomopolymeren,
b) 0,3 bis 2,5 Gew.-% eines Gleitmittels, jeweils bezogen auf die nichtsiegelfähige Oberflächenschicht.

2. Mehrschichtfolie nach Anspruch 1 dadurch gekennzeichnet, daß die siegelfähige Oberflächenschicht als Additive

a) 5 bis 15 Gew.-% eines mit der Olefinharzzusammensetzung der siegelfähigen Oberflächenschicht verträglichen Harzes mit einem Erweichungspunkt von 60 bis 180° C (DIN 1995 - U4) und/oder
b) 5 bis 15 Gew.-% eines Propylenhomopolymeren, jeweils bezogen auf die siegelbare Oberflächenschicht, enthält.

3. Mehrschichtfolie nach Anspruch 1 oder 2, dadurch gekennzeichnet, daß die siegelfähige Oberflächenschicht im wesentlichen aus einem Copolymeren aus Propylen- und Ethylen-Einheiten oder einem Copolymeren aus Propylen- und Buten-1-Einheiten und/oder einem Terpolymeren aus Ethylen-, Propylen- und Buten-1-Einheiten besteht.

4. Mehrschichtfolie nach Anspruch 3, dadurch gekennzeichnet, daß die siegelfähige Oberflächenschicht aus einem Ethylen-Propylen-Buten-1-Terpolymeren und einem Propylen-Buten-1-Copolymeren entsprechend einem Gehalt von 0,1 bis 7 Gew.-% Ethylen, 53 bis 89,9 Gew.-% Propylen und 10 bis 40 Gew.-% Buten-1, bezogen auf die Olefinharzzusammensetzung, besteht.

5. Mehrschichtfolie nach Anspruch 1 oder 2, dadurch gekennzeichnet, daß das Gleitmittel der nicht siegelfähigen Schicht ein Polydiorganosiloxan, insbesondere ein Polydialkylsiloxan oder ein Polyalkylphenylsiloxan ist.

6. Mehrschichtfolie nach Anspruch 5, dadurch gekennzeichnet, daß das Polydiorganosiloxan ein Polydimethylsiloxan oder ein Polymethylphenylsiloxan ist, welches vorzugsweise eine kinematische Viskosität von 10$^3$ bis 10$^6$ mm$^2$/s (25°C) aufweist.

7. Mehrschichtfolie nach einem der Ansprüche 1 bis 6, dadurch gekennzeichnet, daß die nichtsiegelfähige Oberflächenschicht zur Verbesserung der Bedruckbarkeit coronabehandelt ist.

8. Mehrschichtfolie nach einem der Ansprüche 1 bis 7, dadurch gekennzeichnet, daß sie durch biaxiale Streckung orientiert ist.

5

**Claims**

1. Sealable, opaque polyolefinic multilayer film the density of which is equal to/less than 0.85 g/cm³ and which is composed of a base layer comprising a propylene polymer and containing an additive which is incompatible with the polymer, a sealable surface layer which has a minimum sealing temperature which is equal to or less than 100°C, and a second surface layer, wherein the second surface layer is non-sealable and comprises a combination of the following components:

a) from 97.5 to 99.7 % by weight of a propylene homopolymer,
b) from 0.3 to 2.5 % by weight of a slip agent, in each case based on the non-sealable surface layer.

2. A multilayer film as claimed in claim 1, wherein the sealable surface layer contains as additives:

a) from 5 to 15 % by weight of a resin which is compatible with the olefin resin composition of the sealable surface layer and has a softening point in the range from 60 to 180°C (DIN 1995 - U4) and/or
b) from 5 to 15 % by weight of a propylene homopolymer, in each case based on the sealable surface layer.

3. A multilayer film as claimed in claim 1 or 2, wherein the sealable surface layer substantially comprises a copolymer of propylene and ethylene units or a copolymer of propylene and butene-1 units and/or a terpolymer of ethylene, propylene and butene-1 units.

4. A multilayer film as claimed in claim 3, wherein the sealable surface layer comprises an ethylenepropylene-butene-1 terpolymer and a propylene-butene-1 copolymer, corresponding to a content of from 0.1 to 7 % by weight of ethylene, from 53 to 89.9 % by weight of propylene and from 10 to 40 % by weight of butene-1, based on the olefin resin composition.

5. A multilayer film as claimed in claim 1 or 2, wherein the slip agent of the non-sealable layer comprises a polydiorganosiloxane, in particular a polydialkylsiloxane or a polyalkylphenylsiloxane.

6. A multilayer film as claimed in claim 5, wherein the polydiorganosiloxane comprises a polydimethylsiloxane or a polymethylphenylsiloxane, which preferably has a kinematic viscosity from $10^3$ to $10^6$ mm²/s (25°C).

7. A multilayer film as claimed in any of claims 1 to 6, wherein the non-sealable surface layer is coronatreated to improve its printability.

8. A multilayer film as claimed in any of claims 1 to 7, which is oriented by a biaxial stretching process.

**Revendications**

1. Feuille multicouche polyoléfinique opaque soudable, ayant une densité égale ou inférieure à 0,85 g/cm³, constituée d'une couche de base en un polymère propylène qui contient un additif incompatible avec le polymère, d'une couche superficielle soudable ayant une température minimale de soudage égale ou inférieure à 100°C, et d'une seconde couche superficielle, caractérisée en ce que la seconde couche superficielle n'est pas soudable et contient, en combinaison, les composants suivants:

a) de 97,5 à 99,7 % en poids d'un homopolymère propylène,
b) de 0,3 à 2,5 % en poids d'un lubrifiant, chacun par rapport à la couche superficielle non soudable.

2. Feuille multicouche selon la revendication 1, caractérisée en ce que la couche superficielle soudable contient en tant qu'additifs

a) de 5 à 15 % en poids d'une résine compatible avec la composition de résines oléfiniques de la couche superficielle soudable, ayant un point de ramollissement de 60 à 180°C (DIN 1995 - U4) et/ou
b) de 5 à 15 % en poids d'un homopolymère propylène, chacun par rapport à la couche superficielle soudable.

3. Feuille multicouche selon la revendication 1 ou 2, caractérisée en ce que la couche superficielle soudable est essentiellement constituée d'un copolymère à base de motifs propylène et éthylène ou d'un copolymère à base de motifs propylène et butène-1 et/ou d'un terpolymère à base de motifs éthylène, propylène et butène-1.

4. Feuille multicouche selon la revendication 3, caractérisée en ce que la couche superficielle soudable est constituée d'un terpolymère éthylène/propylène/butène-1 et d'un copolymère propylène/butène-1, correspondant à une teneur de 0,1 à 7 % en poids en éthylène, de 53 à 89,9 % en poids en propylène et de 10 à 40 % en poids en butène-1, par rapport à la composition de résines oléfiniques.

EP 0 187 253 B1

5. Feuille multicouche selon la revendication 1 ou 2, caractérisée en ce que le lubrifiant de la couche non soudable est un polydiorganosiloxane, en particulier un polydialkylsiloxane ou un polyalkylphénylsiloxane.

6. Feuille multicouche selon la revendication 5, caractérisée en ce que le polydiorganosiloxane est un polydiméthylsiloxane ou un polyméthylphénylsiloxane, qui présente de préférence une viscosité cinématique de $10^3$ à $10^6$ mm$^2$/s (à 25°C).

7. Feuille multicouche selon l'une des revendications 1 à 6, caractérisée en ce que la couche superficielle non soudable est traitée par effet couronne pour l'amélioration de son imprimabilité.

8. Feuille multicouche selon l'une des revendications 1 à 7, caractérisée en ce qu'elle est orientée par étirage biaxial.

7